(19)

Europäisches Patentamt

European Patent Office

Office européen des brevets

(11) **EP 4 148 375 A1**

(12) **EUROPEAN PATENT APPLICATION**
published in accordance with Art. 153(4) EPC

(43) Date of publication:
**15.03.2023 Bulletin 2023/11**

(21) Application number: **20936158.3**

(22) Date of filing: **19.05.2020**

(51) International Patent Classification (IPC):
***G01B 11/02*** *(2006.01)*

(86) International application number:
**PCT/CN2020/090994**

(87) International publication number:
**WO 2021/232222 (25.11.2021 Gazette 2021/47)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Longgang
Shenzhen, Guangdong 518129 (CN)**

(72) Inventors:
- **ZHU, Jie**
  **Shenzhen, Guangdong 518129 (CN)**
- **CHEN, Yilun**
  **Shenzhen, Guangdong 518129 (CN)**
- **XU, Bin**
  **Shenzhen, Guangdong 518129 (CN)**

(74) Representative: **Pfenning, Meinig & Partner mbB
Patent- und Rechtsanwälte
Theresienhöhe 11a
80339 München (DE)**

(54) **RANGING METHOD AND APPARATUS**

(57)    This application provides a ranging method and apparatus. The method can be applied to a device configured with a plurality of ranging units, and the method includes: forming a ranging unit group by two ranging units in the device that can form a ranging unit group, determining offline, in a right ranging unit, an epipolar curve of a pixel in a left ranging unit in the ranging unit group, and obtaining a correspondence between the pixel and the epipolar curve. In this ranging method, two different cameras can be combined into a generalized binocular camera, and the correspondence between the pixel and the epipolar curve is determined offline, which can reduce online calculation time in a generalized binocular ranging process.

FIG. 7

**Description**

**TECHNICAL FIELD**

This application relates to the object detection field, and more specifically, to a ranging method and apparatus.

**BACKGROUND**

With rapid development of autonomous driving technologies, autonomous driving increasingly requires an omnidirectional sensing technology. The omnidirectional sensing technology plays a key role in a specific autonomous driving scenario. For example, another vehicle travels into a lane in which an ego vehicle is travelling. In this case, the ego vehicle needs to be equipped with side, front, and rear sensing technologies to assess a collision risk.

The omnidirectional sensing technology may be implemented by configuring cameras. An existing vehicle is generally configured with a plurality of cameras. The plurality of cameras may have a same field of view (field of view, FOV), a focal length, a resolution, and the like, or the plurality of cameras may have different FOVs, focal lengths, resolutions, and the like. The plurality of cameras may be mounted at different positions and at different angles of the vehicle. In this case, different cameras have different fields of view, and every two cameras may share different areas of overlapping fields of view, so as to cover an omnidirectional environment of the vehicle. How to combine two different cameras into a generalized binocular camera and perform ranging based on the generalized binocular camera becomes an urgent problem to be resolved.

**SUMMARY**

This application provides a ranging method and apparatus, which are applied to the object detection field, to implement vision-based generalized binocular ranging, and improve ranging performance.

According to a first aspect, a ranging method is provided. The ranging method may be performed by a device that is configured with a plurality of ranging units, or may be performed by a chip or a circuit disposed in the device that is configured with a plurality of ranging units. This is not limited in this application.

The device configured with the plurality of ranging units is a vehicle, a vehicle-mounted device, or another device configured with a plurality of ranging units.

The ranging method includes:

determining a first field of vision of a person observed by a first ranging unit and a second field of view observed by a second ranging unit, where the first field of view includes a first overlapping field of view, the second field of view includes a second overlapping field of view, and the first overlapping field of view is the same as the second overlapping field of view; determining, in an offline state, a first pixel in the first overlapping field and a first epipolar curve corresponding to the first pixel in the second overlapping field of view, where the first pixel is any distorted pixel in the first overlapping field of view; and obtaining a correspondence between all pixels in the first overlapping field of view and epipolar curves corresponding to all the pixels in the second overlapping field of view.

According to the ranging method provided by this application, an epipolar curve of pixels in overlapping fields of view observed by the first ranging unit and the second ranging unit is calculated in an offline state, so that online calculation time in a generalized binocular ranging process can be reduced, and ranging performance can be improved.

With reference to the first aspect, in some implementations of the first aspect, the method further includes: obtaining online a third field of view observed by the first ranging unit and a fourth field of view observed by the second ranging unit, where the third field of view includes a third overlapping field of view, the fourth field of view includes a fourth overlapping field of view, and the third overlapping field of view is the same as the fourth overlapping field of view; determining, based on the correspondence and the second pixel, a matching point corresponding to the second pixel in the fourth overlapping field of view, where the second pixel is any pixel in the third overlapping field of view.

Further, after the pixels in the overlapping fields of view observed by the first ranging unit and the second ranging unit are obtained in an online ranging process, because configuration parameters and relative positions of the first ranging unit and the second ranging unit are generally the same as those obtained in an offline state (for example, a camera configured for a vehicle almost remains unchanged since delivery), in the online ranging process an epipolar curve corresponding to the pixel may be obtained based on a correspondence obtained offline between the pixel and the epipolar curve, to further obtain a matching point corresponding to the pixel to complete pixel matching. This requires no online calculation for the epipolar curve, thereby reducing time for online pixel matching.

With reference to the first aspect, in some implementations of the first aspect, the determining a matching point corresponding to the second pixel in the fourth overlapping field of view includes: determining, based on the correspondence and the second pixel, a second epipolar curve corresponding to the second pixel in the fourth overlapping field of view; and determining the matching point in the second epipolar curve.

Specifically, the pixel matching process includes: first obtaining an epipolar curve corresponding to a pixel, and determining in the epipolar curve a matching point of the pixel. It can be learned from the foregoing description that a process of obtaining the epipolar curve corresponding to the pixel may be determined based on a correspondence obtained offline between the pixel and the epipolar curve. This requires no online calculation for an epipolar curve, thereby reducing time for online pixel matching.

With reference to the first aspect, in some implementations of the first aspect, before the determining a matching point corresponding to the second pixel in the fourth overlapping field of view, the method further includes: determining, based on freespace information of the device, a first freespace point corresponding to the third overlapping field of view and a second freespace point corresponding to the fourth field of view, where the first freespace point corresponds to a first fitted line segment, and the second freespace point corresponds to a second fitted line segment; and the determining a second pixel in the third overlapping field of view includes: determining the second pixel in the first fitted line segment; and the determining a matching point corresponding to the second pixel in the fourth overlapping field of view includes: determining, based on the correspondence and the second pixel, the second epipolar curve corresponding to the second pixel in the fourth overlapping field of view, where an intersection of the second epipolar curve and the second fitted line segment is the matching point.

According to the ranging method provided by this application, auxiliary information (for example, freespace information) is introduced to assist in determining pixel matching, which further improves a pixel matching speed.

With reference to the first aspect, in some implementations of the first aspect, the determining a first epipolar curve corresponding to the first pixel in the second overlapping field of view includes: determining, based on a parameter of the first ranging unit, a de-distorted first pixel corresponding to the first pixel; determining, based on the de-distorted first pixel, a de-distorted first epipolar curve; determining N discrete pixels in the de-distorted first epipolar curve, where N is a positive integer; determining, based on a parameter of the second ranging unit, distorted N discrete pixels corresponding to the N discrete pixels; and fitting the distorted N discrete pixels to obtain the first epipolar curve.

According to the ranging method provided by this application, before the epipolar curve of the pixel is determined, the pixel is a pixel in a de-distorted image (that is, the first pixel is a pixel in an original image), which retains original information and avoids information loss.

With reference to the first aspect, in some implementations of the first aspect, the device includes a first vehicle.

Specifically, the foregoing device configured with the plurality of ranging units may be a vehicle.

With reference to the first aspect, in some implementations of the first aspect, the ranging unit includes a camera, where a first camera and a second camera have different fields of view FOVs and/or focal lengths, or the first camera and the second camera are heterogeneous cameras.

According to the ranging method provided in this application, the ranging unit may be a camera, and the two ranging units may be heterogeneous cameras, which reduces a requirement on a device configuration, and improves feasibility of a solution.

According to a second aspect, a ranging apparatus is provided, where the ranging apparatus includes a processor, configured to implement functions of the device that is configured with the plurality of ranging units in the method described in the first aspect.

Optionally, the ranging apparatus may further include a memory, where the memory is coupled to the processor, and the processor is configured to implement functions of the device that is configured with the plurality of ranging units in the method described in the first aspect.

In a possible implementation, the memory is configured to store program instructions and data. The memory is coupled to the processor, and the processor may invoke and execute program instructions stored in the memory, to implement the functions of the device that is configured with the plurality of ranging units in the method described in the first aspect.

Optionally, the ranging apparatus may further include a communications interface, and the communications interface is used by the ranging apparatus to communicate with another device. When the ranging apparatus is a device configured with a plurality of ranging units, a transceiver may be a communications interface or an input/output interface.

In a possible design, the ranging apparatus includes a processor and a communications interface, configured to implement the functions of the device that is configured with the plurality of ranging units in the method described in the first aspect, and the functions specifically include:

The communications interface is used by the processor to perform external communication.

The processor is configured to run a computer program, to enable the apparatus to implement any method described in the first aspect.

It may be understood that the external communication may be communication with an object other than the processor, or an object other than the apparatus.

In another implementation, when the ranging apparatus is a chip or a chip system, the communications interface may be an input/output interface, an interface circuit, an output circuit, an input circuit, a pin, a related circuit, or the like in the chip or the chip system. The processor may alternatively be embodied as a processing circuit or a logic circuit.

According to a third aspect, a computer-readable storage medium is provided. The computer-readable storage medium stores a computer program. When the computer program is executed by a communications apparatus, the communications apparatus is enabled to implement the method according to any one of the first aspect and the possible implementations of the first aspect.

According to a fourth aspect, a computer program product including instructions is provided. When the instructions are executed by a computer, a communications apparatus is enabled to implement the method according to any one of the first aspect and the possible implementations of the first aspect.

According to a fifth aspect, a communications system is provided, including the ranging apparatus provided in the second aspect and an access network device.

## BRIEF DESCRIPTION OF DRAWINGS

FIG. 1 is a schematic diagram of a V2X system;
FIG. 2 is a schematic diagram of a 2D bounding box according to an embodiment of this application;
FIG. 3 is a schematic diagram in which a vehicle is configured with a plurality of cameras according to an embodiment of this application;
FIG. 4 is a schematic diagram of a common binocular camera;
FIG. 5 is a schematic diagram of a basic model of epipolar geometry;
FIG. 6 is a schematic diagram of freespace according to an embodiment of this application;
FIG. 7 is a schematic flowchart of a ranging method according to this application;
FIG. 8 is a schematic flowchart of determining an epipolar curve according to an embodiment of this application;
FIG. 9 is a schematic diagram of freespace points according to this application;
FIG. 10 is a schematic diagram of fitting freespace points according to this application;
FIG. 11 is a schematic diagram of a ranging apparatus 1100 according to this application; and
FIG. 12 is a schematic diagram of a structure of a first vehicle 1200 applicable to an embodiment of this application.

## DESCRIPTION OF EMBODIMENTS

The following describes technical solutions of this application with reference to the accompanying drawings.

Terms used in the following embodiments are merely intended to describe specific embodiments, but are not intended to limit this application. As used in the specification and appended claims of this application, singular expressions "an", "a", "the", "above", "the", and "this" are intended to include such an expression like "one or more", unless the contrary is clearly indicated in a context. It should be further understood that in the following embodiments of this application, "at least one" and "one or more" refer to one, two, or more.

Reference to "one embodiment" or "some embodiments" described in this specification or the like means that one or more embodiments of this application include a particular feature, structure, or characteristic described in combination with the embodiment. Thus, phrases "in one embodiment", "in some embodiments", "in some other embodiments", "in some additional embodiments", and the like that appear in different parts in this specification do not necessarily mean referring to a same embodiment, but mean "one or more embodiments, but not all embodiments", unless otherwise specifically emphasized. The terms "include", "comprise", "have", and their variants all mean "include but are not limited to", unless otherwise specifically emphasized.

The technical solutions in some embodiments of this application may be applied to a vehicle to everything (vehicle to everything, V2X) communications system. As the society gradually develops, vehicles are becoming more popular. Driving facilitates people's travel, but also causes adverse impact to the human society. A rapid increase in a quantity of vehicles causes a series of problems such as urban traffic congestion, frequent traffic accidents, and poor environmental quality. In consideration of personal safety, traffic efficiency, environmental protection, economic effects, and the like, a comprehensive intelligent transportation system (intelligent transportation system, ITS) is required. Currently, the ITS has naturally become a global concern.

Currently, a vehicle may obtain timely road condition information or receive timely service information through communication manners such as vehicle to vehicle (vehicle to vehicle, V2V), vehicle to infrastructure (vehicle to infrastructure, V2I), vehicle to pedestrian (vehicle to pedestrian, V2P), or vehicle to network (vehicle to network, V2N). These communication manners may be collectively referred to as V2X communication (X represents anything).

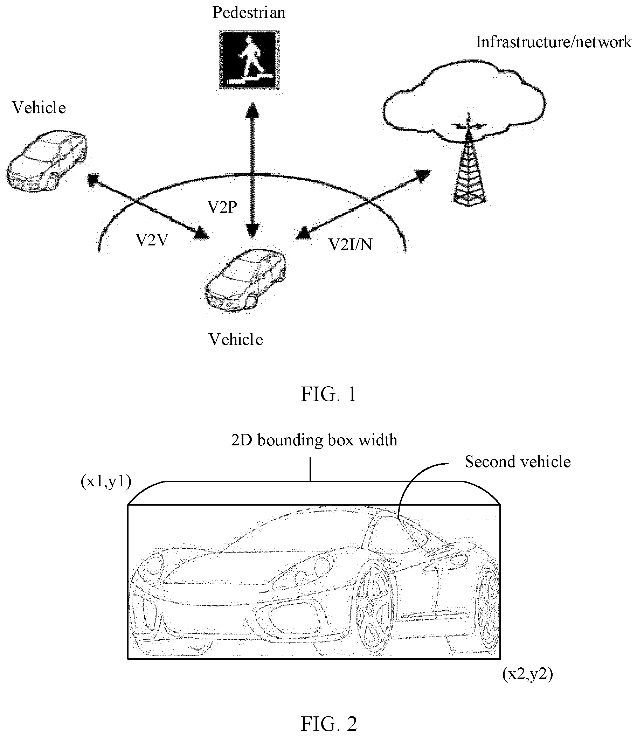

FIG. 1 is a schematic diagram of a V2X system. The schematic diagram includes V2V communication, V2P communication, and V2I/N communication. As shown in FIG. 1, communication between vehicles is performed through V2V A vehicle may broadcast information about the vehicle such as a driving speed, a driving direction, a specific location, and abrupt deceleration to a surrounding vehicle, so that a driver of the surrounding vehicle can obtain the information to better learn of a traffic condition outside a line of sight, to predict a danger and further avoid the danger. Communication between the vehicle and roadside infrastructure is performed through V2I. The roadside infrastructure may provide access of various types of service information and data networks for the vehicle. Functions such as non-parking toll and in-car entertainment greatly improve traffic intelligence. The roadside infrastructure such as a road side unit (road side unit, RSU) includes two types. One type is an RSU in a terminal device type. Because the RSU is distributed on the roadside, the RSU in the terminal device type is in a non-mobile state, and mobility does not need to be considered. The other type is an RSU in a network device type. The RSU in the network device type may provide timing synchronization and resource scheduling for a vehicle communicating with the network device. Vehicle-to-human (for example, vehicle-to-pedestrian, vehicle-to-cyclist, vehicle-to-driver, or vehicle-to-passenger) communication is performed through V2P. Vehicle-to-network communication is performed through V2N. V2N and V2I may be collectively referred to as V2I/N.

It should be understood that FIG. 1 is merely an example of a schematic diagram for describing a V2X system, and constitutes no limitation on this application. For example, there may be a plurality of vehicles, pedestrians, and infrastructure whose quantities are not those shown in FIG. 1.

FIG. 1 describes a scenario to which an embodiment of this application is applicable. For ease of understanding of the technical solutions of this application, the following briefly describes several basic concepts in the technical solutions of this application.

1. Object detection

The task of object detection (object detection) is an important task in the machine vision field. Object detection aims to find a subject of interest in an image or video (the subject may be referred to as an object), and output the position and classification of the object. For example, 2D object detection outputs a category and a minimum bounding box of the object in the image (the image in this application refers to an image of a target object detected by a terminal device). For another example, 3D object detection outputs a category of the object and information such as the length, width, height, and a rotation angle of the object in the three-dimensional space.

Object detection, also referred to as object extraction, is a type of object localization based on geometric and statistical features of the object. This technology combines localization and recognition of the object, which requires accurate and real-time performance as an important capability of an object localization system. Especially in a complex scenario, automatic object extraction and recognition are particularly important when a plurality of objects need to be processed in real time.

With the development of computer technologies and the widespread application of the computer vision principles, real-time object tracking through the computer image processing technology becomes an increasingly popular topic for research. Dynamic real-time object tracking and positioning can be widely used in an intelligent transportation system, an intelligent monitoring system, military object detection, and surgical instrument positioning in a medical navigation surgery.

The ranging method provided by this application may also be applied to the object detection field, to measure a distance of an object. For example, in a V2X scenario, a distance between an obstacle and an ego vehicle can be detected.

2. 2D bounding box

In a 2D object detection process, a bounding box (bounding box) is usually used to describe a position of a detected object. The bounding box is a rectangle that can be determined by the x1-axis and y1-axis coordinates in the upper left corner of the rectangle and the x2-axis and y2-axis coordinates in the lower right corner of the rectangle. The bounding box is shown in FIG. 2. FIG. 2 is a schematic diagram of a 2D bounding box according to an embodiment of this application.

For example, a second vehicle shown in FIG. 2 is an image of an object detected by a first vehicle. How to implement object detection is not limited in some embodiments of this application. Object detection may be performed by using an existing method or a method related to a later developed technology.

It should be understood that, in the 2D object detection process, the bounding box is predicted through a neural network. The neural network predicts a position and size of the bounding box relative to a reference point, detects a class of an object in the bounding box, a confidence score of whether an object exists in the bounding box, and a class-specific confidence score of the object.

3. Omnidirectional sensing technology

The omnidirectional sensing technology is recently an important subject in the autonomous driving field, and needs one or more sensors to sense a 360-degree environment outside a device (for example, a robot, an ego vehicle, or another device).

The ranging method provided in this application may be applied to the V2X system shown in FIG. 1. For ease of description, an omnidirectional sensing technology of a vehicle is used as an example to describe the ranging method provided in this application. For example, if the omnidirectional sensing technology is applied to a first vehicle, the 360-degree environment outside the device may include: information such as a position (a longitudinal distance and/or a lateral distance) of an obstacle like another vehicle (for example, a second vehicle), a pedestrian, or a cyclist relative to the first vehicle, a relative speed between the obstacle and the first vehicle, and an angle of the obstacle relative to the ego vehicle.

It should be understood that in some embodiments of this application, that the first vehicle is equipped with the omnidirectional sensing technology is merely used as an example for description, and the protection scope of this application is not limited. The ranging method provided by this application may be further applied to another device in a specific manner similar to how the ranging method is applied to the first vehicle. Thus the specific manner is not described with another example herein.

In this application, the first vehicle is equipped with an omnidirectional sensing technology, which may be implemented by configuring cameras for the first vehicle. Due to limitations on mounting positions and algorithms, a monocular camera fails to perform accurate ranging in a specific scenario (for example, the first vehicle travels uphill and downhill and/or the first vehicle vibrates and bumps up and down). In addition, a monocular camera generally cannot implement a 360-degree omnidirectional coverage. Therefore, a plurality of cameras are generally configured for a current vehicle to implement the omnidirectional sensing technology. The plurality of cameras have same or different FOVs, focal lengths, resolutions, or the like, and are mounted at different positions and/or different angles of a first vehicle (for example, a vehicle body). The plurality of cameras have different fields of view, and every two cameras may share different degrees of overlapping field of view, so as to cover a 360-degree omnidirectional environment outside the first vehicle.

It should be noted that the field of view of a camera in some embodiments of this application may be understood as the extent of vision that can be observed by the camera, an area that can be observed by the camera, an image that can be obtained by the camera, or the like. The overlapping field of view between two cameras may be understood as an overlapping field, an overlapping area, or the like that exists between respective fields of view of the two cameras. How to describe the field of view and/or the overlapping field of view does not constitute a limitation on the protection scope of this application. For unified description, the extent of vision of a camera is referred to as a field of view observed by a camera, and fields of view that overlap between two cameras are referred to as an overlapping field of view.

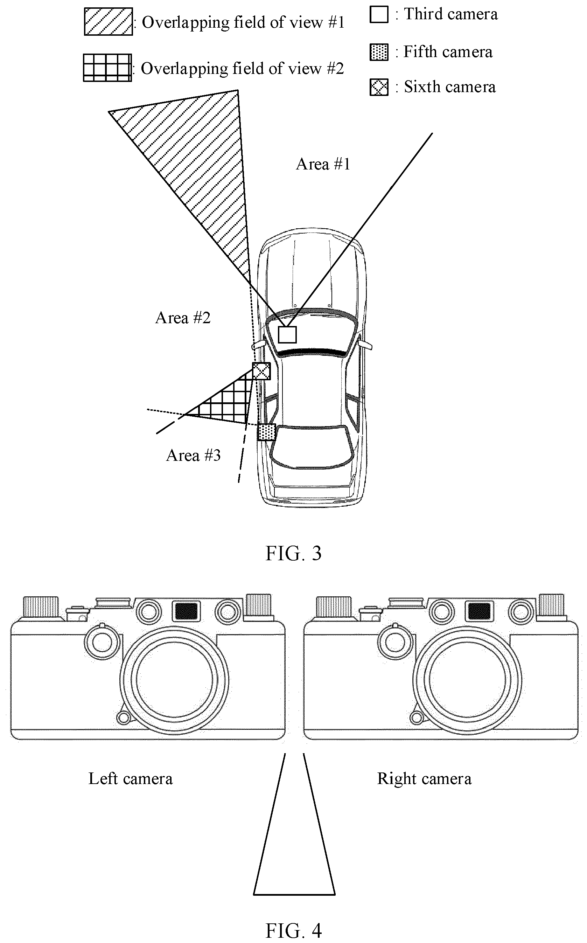

For example, a plurality of cameras configured for a first vehicle are shown in FIG. 3. FIG. 3 is a schematic diagram in which a vehicle is configured with a plurality of cameras according to an embodiment of this application. The front of a first vehicle body is configured with four cameras. Two of the four cameras (for example, a first camera and a second camera) have a same FOV and focal length and can be combined into a common binocular camera. The other two of the four cameras (for example, a third camera and a fourth camera) have different FOVs and focal lengths and cannot be combined into a common binocular camera. Both sides of the first vehicle body are configured respectively with two cameras (for example, the left side of the vehicle body is configured with a fifth camera and a sixth camera). The rear of the first vehicle body is configured with a camera. The front, the rear, the left, and the right of the first vehicle body are configured respectively with a fisheye camera. All the configurations above can cover a 360-degree omnidirectional environment outside the first vehicle. Respective fields of view of a fisheye camera and a common camera have a large overlapping field of view. Generally, a distance between an obstacle and an ego vehicle may be measured by using a binocular ranging algorithm to obtain a more accurate result if the obstacle is located in the overlapping field of view between the respective fields of view of the two cameras.

It is assumed that a field of view observed by the third camera is an area #1 shown in FIG. 3, a field of view observed by the fifth camera is an area #2 shown in FIG. 3, and a field of view observed by the sixth camera is an area #3 shown in FIG. 3, an area covered by the third camera and the field of view observed by the fifth camera have an overlapping field of view #1 shown in FIG. 3, and an area covered by the sixth camera and the field of view observed by the fifth camera have an overlapping field of view # 2 shown in FIG. 3. For an overlapping area, the binocular algorithm is more accurate in ranging.

It should be understood that the cameras shown in FIG. 3 may be all or some of the plurality of cameras configured for the first vehicle, in order to describe that respective fields of view observed by two cameras configured at different positions of the first vehicle may have an overlapping field of view. FIG. 3 is merely a schematic diagram, and does not impose any limitation on the quantities, positions, parameters, relative poses, or the like of the cameras configured for the first vehicle.

It can be learned from the foregoing that for the first vehicle equipped with the omnidirectional sensing technology, in the 360-degree omnidirectional environment outside the first vehicle, respective fields of view observed by two cameras have an overlapping field of view, and a distance between an obstacle (or referred to as an object) in the overlapping field of view and the first vehicle may be measured by using the binocular ranging algorithm to obtain a more accurate result. A binocular camera is required for performing binocular ranging. The following describes a common binocular camera and a generalized binocular camera, a common binocular ranging method corresponding to the common binocular camera, and a generalized binocular ranging method corresponding to the generalized binocular camera.

4. Common binocular ranging

Common binocular ranging, as shown in FIG. 4, is an existing ranging manner in a current autonomous driving technology. FIG. 4 is a schematic diagram of a common binocular camera. As shown in FIG. 4, the common binocular camera consists of two identical cameras (for example, the left camera and the right camera shown in FIG. 4). The identical cameras in this application have a same configuration, for example, a same FOV, a same focal length, or a same resolution.

Common binocular ranging is performed directly on a target object based on a parallax between images generated by the left and right cameras. It should be noted that a binocular camera can sense how far an object is because there is a difference between respective images obtained by the two cameras for a same object, and the difference is also referred to as a "parallax". The farther the object is from the binocular camera, the smaller the parallax is. Conversely, the closer the object is to the binocular camera, the greater the parallax is. The parallax is relative to a distance between the object and the binocular camera. The binocular camera mainly uses the principles of parallax and triangulation ranging to measure the distance. In this way, sensing the distance of the target object is an absolute measurement rather than an estimation.

However, the common binocular camera needs two identical cameras, and a large amount of computation is required from camera imaging and de-distortion to calculation of the distance of the target object based on parallax and triangulation, which imposes a high requirement on processing hardware for binocular ranging.

If a common binocular camera solution is used in the omnidirectional sensing technology of a vehicle, at least two identical cameras are required for each side of the vehicle body. In this solution, a large quantity of cameras are used. However, for a plurality of cameras configured for the vehicle, respective fields of view observed by two cameras (different cameras) inherently have an overlapping field of view. (As shown in FIG. 3, the third camera and the sixth camera in FIG. 3 are not necessarily identical cameras, and the sixth camera and the fifth camera are not necessarily identical cameras.) For example, there is a high possibility that respective fields of view observed by a fisheye camera and a common camera have an overlapping field of view, but the fisheye camera and the common camera are not identical cameras, and cannot be combined into a common binocular camera.

To combine the two different cameras among the plurality of cameras already configured for the vehicle into a binocular camera, a concept of generalized binocular camera is proposed. This application mainly relates to ranging performed by a generalized binocular camera. The following briefly describes the generalized binocular camera.

5. Generalized binocular camera

It can be learned from the foregoing description of common binocular ranging that the plurality of cameras configured for an existing vehicle cannot ensure that two identical cameras are configured on each side of a vehicle body, to be combined into a common binocular camera. Generally, two cameras having an overlapping field of view between respective fields of view observed by the two cameras among a plurality of cameras configured for a vehicle cannot be combined into the foregoing common binocular camera. To enable the vehicle to implement an omnidirectional sensing technology based on common binocular cameras, the vehicle needs to be configured with too many cameras, which drives up costs, and thus does not meet an actual requirement.

If any two cameras having an overlapping field of view between respective observed fields of view can be combined into a binocular camera, there is no need to increase a quantity of cameras configured for the vehicle. A binocular camera formed by any two cameras having an overlapping field of view between respective observed fields of view is referred to as a generalized binocular camera, that is, the two cameras combined into the generalized binocular camera do not need to be identical cameras.

It should be noted that, even if the two cameras combined into the generalized binocular camera do not need to be identical, the generalized binocular camera, similar to the foregoing common binocular camera, includes a left camera and a right camera as well. For a schematic diagram of the generalized binocular camera, refer to FIG. 4, where a difference lies in that the two cameras combined into the generalized binocular camera may be two different cameras. For brevity, the generalized binocular camera is not described with reference to the accompanying drawings in this application.

If two cameras having an overlapping field of view between respective observed fields of view can be combined into a generalized binocular camera, two cameras having an overlapping field of view in the plurality of cameras configured for the existing vehicle may be combined into a generalized binocular camera. For example, a common camera and a fisheye camera (which may also be referred to as heterogeneous cameras), a fisheye camera and a fisheye camera, a red-green-blue (red, green, blue, RGB) camera and a gray-scale (Gray) camera, or an RGB camera and an infrared camera may respectively be combined into generalized binocular cameras. In addition, it should be noted that respective fields of view observed by a fisheye camera and another type of camera may usually have a large field of view. If a generalized binocular ranging method is used to perform ranging, a good ranging effect can be achieved. The following further describes the ranging principles of the generalized binocular camera.

6. Generalized binocular ranging

If heterogeneous cameras are combined into a generalized binocular camera and generalized binocular ranging is performed based on the generalized binocular camera, epipolar geometry can take effect in feature point matching (epipolar geometry will be described in the following specification). Generally, when epipolar geometry takes effect in feature point matching, a direct method is used to select eight points around a feature point in a left camera of the generalized binocular camera, and the grayscale values and gradients of the eight points are obtained. Another eight points are selected around each point in an epipolar curve, in a right camera, corresponding to the feature point to perform one-to-one matching with the feature point, until a matching point of the feature point in the left camera is found in the right camera.

If the left and right cameras of the generalized binocular camera are mounted at quite different angles, the two cameras can see a same obstacle, yet they may see different parts of the obstacle. In this case, what may occur most often is blocking. On one hand, for example, if the feature point in the left camera is blocked in the right camera, or a point corresponding to the feature point in the left camera cannot be matched in the right camera, the matching point of the feature point cannot be found by using the direct method, and thus the epipolar geometry-based matching fails. On the other hand, if generalized binocular matching is performed between an RGB camera and a gray-scale camera or generalized binocular matching is performed between an RGB camera and an infrared camera, grayscale and gradient information of a feature point cannot be found, and thus epipolar geometry-based matching fails as well.

7. Epipolar geometry (epipolar geometry)

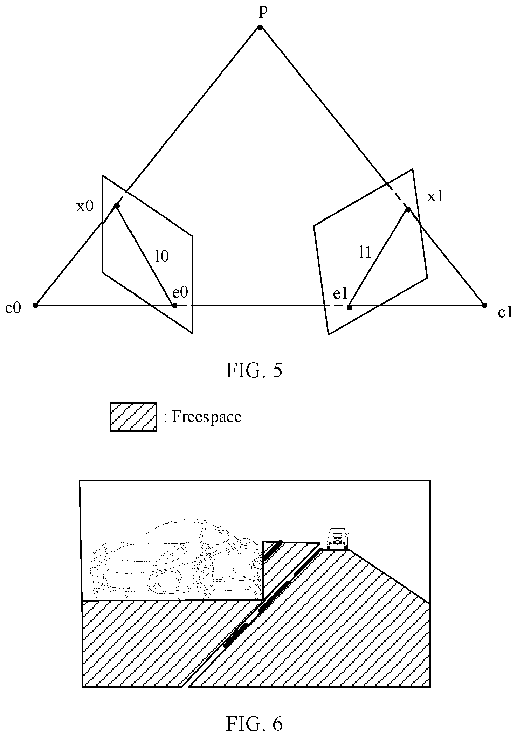

Epipolar geometry is a special geometric relationship between two images generated at two camera positions. Figure 5 is a basic model of epipolar geometry. c0 and c1 shown in FIG. 5 are two camera centers, and p is a point in space.

Specifically, a projection of p on a corresponding image plane of c0 is x0, and a projection of p on a corresponding image plane of c1 is x1. An intersection of a line between c0 and c1 and an image plane corresponding to c0 is e0, and an intersection of a line between c0 and c1 and an image plane corresponding to c1 is e1. A line between e0 and x0 is 10, and a line between e1 and x1 is 11. e0 and e1 are referred to as epipoles (epipoles), 10 and 11 are referred to as epipolar lines (epipolar lines), and a plane formed by three points c0, c1, and p is referred to as an epipolar plane (epipolar plane).

8. Epipolar constraint (epipolar constraint)

The most important formula in epipolar geometry mentioned above is an epipolar constraint, and the derivation process of the epipolar constraint includes:

According to a pinhole camera model, for a pixel coordinate p of a point on a camera imaging plane and a 3D coordinate P of a point in a world coordinate system, p=KP. If the pixel coordinates are represented by homogeneous coordinates, for p and P:

dp=KP, where d represents a spatial depth (to change the homogeneous term of p to 1), K represents an intrinsic parameter matrix of a camera, and both p and P are homogeneous coordinates.

If the coordinate system of a first camera is used as a reference, for both cameras:

$d_0 p_0$=KP, $d_1 p_1$=K(RP+t), where R is a rotation (Rotation) matrix, and t is a translation (Translation) vector.

Assume $x=K^{-1}p$, and remove the intrinsic parameter K for normalization:

$d_0 x_0$=P, $d_1 x_1$=RP+t, and combine the two equations to obtain the following equation:

$d_1 x_1$=R($d_0 x_0$)+t, and obtain a cross product of each side and t to remove t that follows the plus sign:

$t \times d_1 x_1 = t \times R(d_0 x_0) + t \times t$, and further:

$t \times x_1 = t \times Rx_0$, and left-multiply each side by $x_1^T$:

$$x_1^T (t \times x_1) = x_1^T t \times Rx_0$$

Because the left of the equal sign is multiplied by a vector perpendicular to itself, the left of the equal sign is equal to 0. Therefore:

$$x_1^T \; t \times R x_0 = 0$$

This equation is referred to as an epipolar constraint (Epipolar Constraint).

The geometric meaning of the epipolar constraint is as follows: The triple product of $x_1^T$, t, and $Rx_0$ is 0, indicating that the three vectors are coplanar, that is, the three edges of the triangle formed by c0, c1, and p in FIG. 2 are coplanar.

Assume $E = t \times R$, to obtain a new form of epipolar constraint:

$$x_1^T \; E x_0 = 0$$

E is referred to as an essential matrix (Essential Matrix), and is determined by extrinsic parameters R and t.

The geometric meaning of the essential matrix is as follows: $x_1^T \; l_1 = 0$, that is, x1 is on a line $l_1 = E x_0$, indicating that E projects $x_0$ onto the line $l_1$ in another frame of image.

9. De-distortion

Image distortion indicates distortion of an original image caused by the deviations from lens manufacturing accuracy and in assembly technologies. Currently, a common camera needs to be de-distorted when used, especially a fisheye camera. If not de-distorted, an original image generated by a camera is generally unavailable. However, information may be lost after the original image is de-distorted. Information loss is fatal in autonomous driving and thus results in potential risks of traffic accidents.

10. Freespace (freespace)

The freespace in some embodiments of this application refers to a drivable area that is detected by a vehicle travelling on a lane.

For example, FIG. 6 is a schematic diagram of freespace according to an embodiment of this application. The field of view observed by a first vehicle includes a drivable area (for example, an area of no obstacles on an ego lane, an area of no obstacles on an adjacent lane, another area of no obstacles where a vehicle can travel, or the like) and a non-drivable area (for example, an area on a lane where another vehicle is travelling, sky, a green belt, or the like).

It should be noted that in some embodiments of this application, only how to use the semantic information of freespace is involved. For how to determine the freespace, refer to a determining solution in the prior art. Details are not described herein in this application.

It can be learned from the foregoing description that, in the foregoing generalized binocular ranging method, the epipolar geometry-based matching may fail (for example, a matching point cannot be found). In addition, an existing de-distortion technology may cause information loss. To resolve the defects in the prior art, this application provides a ranging method, thereby avoiding unsuccessful epipolar geometry-based matching and information loss that is caused by de-distortion.

The following describes the ranging method provided by this application with reference to the accompanying drawings. The ranging method provided by this application may be applied to a device configured with a plurality of cameras, and the device may be a vehicle or another mobile device. For ease of description, in some embodiments of this application, an example in which the device is a first vehicle is used for description. A case in which the device is another device is similar to the case in which the device is the first vehicle, and thus is not described with another example herein in this application.

The first vehicle is configured with a plurality of cameras. The plurality of cameras include two cameras that can be combined into a generalized binocular camera. Respective observation ranges of the two cameras that can be combined into the generalized binocular camera include a same area, which is referred to as an overlapping area. In this application, a quantity of cameras specifically configured for the first vehicle is not limited, and at least two cameras may be configured.

When the first vehicle is configured with two cameras, respective fields of view observed by the two cameras have an overlapping field of view, and the two cameras are different cameras (for example, cameras with different FOVs, focal lengths, or different resolutions).

When the first vehicle is configured with at least two cameras, the at least two cameras may be combined into at least a generalized binocular camera. It should be understood that it is not limited in some embodiments of this application that the foregoing at least two cameras include only a generalized binocular camera. A generalized binocular camera may be formed by any two of the at least two cameras if respective fields of view observed by the two cameras have an overlapping field of view.

For example, if the first vehicle is configured with three cameras, and respective fields of view observed by every two of the three cameras have an overlapping field of view, the three cameras may be combined into three generalized binocular cameras.

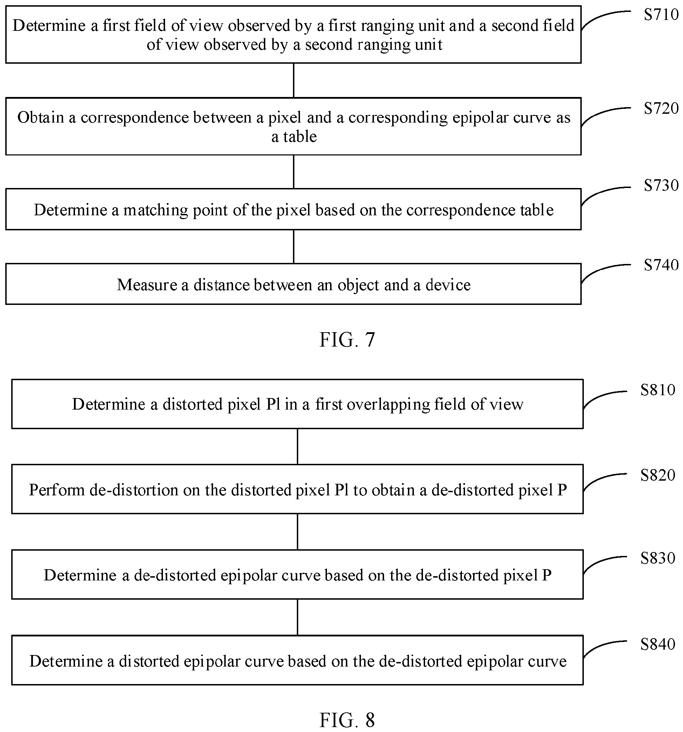

FIG. 7 is a schematic flowchart of a ranging method according to this application. This method is applied to a device including a plurality of ranging units, and includes at least some of the following steps.

S710: Determine a first field of view observed by a first ranging unit and a second field of view observed by a second ranging unit.

There is an intersection between the first field of view range and the second field of view.

For example, the first ranging unit and the second ranging unit form a ranging unit group.

In this application, the intersection between the first field of view and the second field of view is referred to as an overlapping field of view (which may also be referred to as a common field of view). For ease of distinguishing, an overlapping field of view in the first field of view is referred to as a first overlapping field of view, and an overlapping field of view in the second field of view is referred to as a second overlapping field of view.

The foregoing device may be configured with a plurality of ranging units, and the first ranging unit and the second ranging unit are any two ranging units that can form a ranging unit group among the plurality of ranging units. In this application, what is limited is that only two ranging units whose observed respective fields of view have an overlapping field of view can form a ranging unit group.

In addition, the ranging unit in some embodiments of this application is mainly configured to obtain related information required for ranging, for example, to complete object recognition and detection, and obtain location-related information of an object. A name of a unit for obtaining related information required for ranging is not limited in this application, and may be referred to as a ranging unit, or may be referred to as an object detection unit, a first unit, or the like.

The obtained related information required for ranging is processed by a ranging information processing unit to complete ranging. A system consisting of the ranging unit and the ranging information processing unit may be referred to as a ranging system.

For ease of description, the ranging method provided by this application is described by using an example in which binocular ranging is implemented through a generalized binocular camera formed by two of the plurality of cameras configured for the first vehicle. If the plurality of cameras configured for the first vehicle can be combined into a plurality of generalized binocular cameras, a process of implementing binocular ranging through each of the generalized binocular cameras is similar, and thus does not need to be enumerated.

For example, in some embodiments of this application, the foregoing device may be a first vehicle, the foregoing ranging unit may be a camera, the ranging unit group may be a generalized binocular camera, the observed field of view may be a field of view observed by the camera, and the intersection between the observed fields of view may be understood as an overlapping field of view included by respective fields of view observed by two cameras. For example, a field of view observed by a first camera is an area #1, the area #1 includes an object #1 and an object #2; a field of view observed by a second camera is an area #2, the area #2 includes the object #1 and an object #3; and there is an intersection object #1 between respective fields of view observed by the first camera and the second camera.

For ease of understanding, an example in which the device is a first vehicle, the ranging unit is a camera, and the ranging unit group is a generalized binocular camera is used for description below.

It should be noted that in this application the device may be the first vehicle, or may also be another device. For example, the device may be a robot, a mobile terminal device, or another device. Likewise, in this application the ranging unit may be a camera, or may also be another detection unit that can detect an object. For example, the ranging unit may be a camera, a sensor, or another detection device.

For example, as shown in FIG. 3, in a 360-degree omnidirectional sensing camera system configured for the first vehicle, respective fields of view observed by two cameras mounted at different positions usually have an overlapping field of view. Based on a distribution of mounted cameras, two cameras having an overlapping field of view may be combined into a generalized binocular camera, and each generalized binocular camera may include a left camera and a right camera based on their relative positions. All the cameras in a multi-camera system configured for the first vehicle may be grouped in the foregoing manner, to obtain a plurality of generalized binocular cameras.

The two cameras that are combined into the generalized binocular camera may be common cameras or even heterogeneous cameras. The two cameras may be common cameras with different FOVs, different focal lengths, and the like, or may be a common camera and a fisheye camera (a camera with relatively severe distortion), or may be both fisheye cameras, or may be an RGB camera and a gray-scale camera, or may be an RGB camera and an infrared camera, and the like. Every two cameras configured for the first vehicle that can perform imaging and have an overlapping field of view may be matched and form a generalized binocular camera.

How to form a generalized binocular camera is not limited in some embodiments of this application. For example, the plurality of cameras configured for the first vehicle may simultaneously collect image data, the collected image data is transmitted to an on-board GPU and an on-board CPU of the first vehicle, two cameras having an overlapping field of view are determined through some image comparison algorithms (for example, deep learning algorithm), and the two cameras having the overlapping field of view may be matched and form a generalized binocular camera.

It should be understood that in some embodiments of this application, each camera configured for the first vehicle has been calibrated, and a calibration parameter (for example, intrinsic parameter, extrinsic parameter, distortion parameter, or relative pose) of each camera are stored in the on-board memory of the first vehicle for later use. Then, intrinsic and extrinsic parameters and relative poses of the two cameras that are combined into the generalized binocular camera are fixed. The two cameras that are combined into the generalized binocular camera may be the left camera and the right camera (as determined by the relative positions).

For example, mounting positions of a first camera and a second camera on the first vehicle generally do not change, and intrinsic and extrinsic parameters of the first camera and the second camera are inherent characteristics of the camera and thus generally do not change as well. If the mounting positions of the cameras change later due to other reasons, or the first camera or the second camera is replaced by another camera, a changed camera completes reconfiguration, and matching is re-performed to form a generalized binocular camera before the first vehicle detects an object again. The generalized binocular camera in this application is two cameras that have been configured. A specific process of the configuration is not limited. For details, refer to a manner of forming a generalized binocular camera in the prior art.

Further, after the generalized binocular camera is combined into, epipolar matching for a pixel in an overlapping field of view of images obtained by the left and right cameras is implemented, and a correspondence between a corresponding epipolar curve that is of each of pixels in the first overlapping field of view in the first field of view observed by the left camera and that is in the second overlapping field of view in the second field of view observed by the right camera.

Optionally, the obtained correspondence between the pixel and the corresponding epipolar curve may be stored as a table, so as to be used in subsequent online processing.

To be specific, the method process shown in FIG. 7 further includes S720: obtain a correspondence between a pixel and a corresponding epipolar curve as a table. The first field of view obtained by the left camera and the second field of view obtained by the right camera in the generalized binocular camera include an overlapping field of view. For distinguishing, an overlapping field of view in the first field of view obtained by the left camera is referred to as a first overlapping field of view, and a common field of view in the second field of view obtained by the right camera is referred to as a second overlapping field of view.

The correspondence table includes a correspondence between a first pixel in the first overlapping field of view and a first epipolar curve corresponding to the first pixel in the second overlapping field of view. The first pixel is any pixel in the first overlapping field of view, and the correspondence table includes a correspondence between all pixels in the first overlapping field of view and epipolar curves corresponding to all the pixels.

For example, the first overlapping field of view includes 10 pixels (pixel # 1 to pixel # 10), and the 10 pixels respectively correspond to 10 epipolar curves in the second overlapping field of view (epipolar curve # 1 to epipolar curve # 10), where the pixel #1 corresponds to the epipolar curve #1, the pixel #2 corresponds to the epipolar curve #2, ..., the pixel #9 corresponds to the epipolar curve #9, and the pixel #10 corresponds to the epipolar curve #10. In this case, a specific form of the correspondence table may be shown in the following Table 1.

| Pixel | Epipolar curve |
|---|---|
| Pixel # 1 | Epipolar curve # 1 |
| Pixel # 2 | Epipolar curve # 2 |
| Pixel # 3 | Epipolar curve # 3 |
| Pixel # 4 | Epipolar curve # 4 |
| Pixel # 5 | Epipolar curve # 5 |
| Pixel # 6 | Epipolar curve # 6 |
| Pixel # 7 | Epipolar curve # 7 |
| Pixel # 8 | Epipolar curve # 8 |

(continued)

| Pixel | Epipolar curve |
|---|---|
| Pixel # 9 | Epipolar curve # 9 |
| Pixel # 10 | Epipolar curve #10 |

The pixels included in the first overlapping field of view are distorted pixels, that is, points extracted from the first overlapping field of view in the first field of view obtained by the left camera.

It should be understood that the description above that the first overlapping field of view includes 10 pixels is merely an example and does not constitute any limitation on the protection scope of this application. When a quantity of pixels included in the first overlapping field of view is greater than or less than 10, a performing process similar to the foregoing process is required: finding epipolar curves corresponding to all pixels in the first overlapping field of view, and storing a correspondence between the pixels and the epipolar curves.

To describe specific implementation of the foregoing determining the correspondence table, the following describes, with reference to FIG. 8, how to determine an epipolar curve that is corresponding to a pixel P1 and that is in the second overlapping field of view by using the pixel P1 in the first overlapping field of view as an example. The pixel P1 and the corresponding epipolar curve are stored in the on-board memory of the first vehicle for later use.

FIG. 8 is a schematic flowchart of determining an epipolar curve according to an embodiment of this application. At least some of the following steps are included.

S810: Determine a distorted pixel P1 in a first overlapping field of view.

The pixel P1 is any pixel (for example, a first pixel) in the first overlapping field of view in a first field of view observed by a left camera. How to determine a pixel in the first overlapping field of view is not limited in some embodiments of this application. For details, refer to a method for determining a pixel in a left camera view in epipolar matching in the prior art, or refer to a future solution for determining a pixel in an original image obtained by the left camera. Details are not described herein.

S820: Perform de-distortion on the distorted pixel P1 to obtain a de-distorted pixel P.

The pixel P is a pixel obtained after the pixel P1 is de-distorted.

It should be understood that the first field of view obtained by the left camera is distorted, and the pixel P1 determined in the first overlapping field of view included in the foregoing first field of view is also distorted.

The left camera is a calibrated camera, and a calibration parameter of the left camera is stored in the on-board memory of the first vehicle. For example, distortion coefficients of the left camera lens include: { $k_1$, $k_2$, $k_3$, $p_1$, $p_2$ }, where $k_1$, $k_2$, $k_3$ are radial distortion coefficients, and $p_1$, $p_2$ are tangential distortion coefficients. The following formulas are de-distortion formulas:

$$x_{correct} = x(1 + k_1r^2 + k_2r^4 + k_3r^6) + 2p_1xy + p_2(r^2 + 2x^2)$$

$$y_{correct} = y(1 + k_1r^2 + k_2r^4 + k_3r^6) + 2p_2xy + p_1(r^2 + 2y^2)$$

where $[x, y]^T$ are normalized coordinates in a left camera coordinate system, and $r^2 = x^2 + y^2$.

After radial and tangential de-distortions are performed on the P1 according to the foregoing de-distortion formulas, a de-distorted pixel P is projected onto a pixel plane through an intrinsic parameter matrix of the left camera, to obtain coordinates of the de-distorted pixel P in the left camera coordinate system.

$$u = f_x x_{correct} + C_x$$

$$v = f_y y_{correct} + C_y$$

where $f_x$, $f_y$, $C_x$, and $C_y$ may be learned through the intrinsic parameter matrix of the left camera. $f_x$ and $f_y$ are focal lengths of the left camera, and $C_x$ and $C_y$ are pixel coordinates of an optical center.

In this application, a de-distortion process is briefly described. For detailed de-distortion, refer to a de-distortion process in the prior art. How to perform de-distortion is not limited in this application. For details, refer to the prior art or a future de-distortion process. S820 is a possible de-distortion solution provided merely for ease of understanding.

S830: Determine a de-distorted epipolar curve based on the de-distorted pixel P.

According to the foregoing description, there is an epipolar constraint in epipolar geometry. In addition, the foregoing describes a derivation process of an epipolar constraint, and the following briefly describes an epipolar constraint based on the foregoing pixel P.

According to the relationship of projective geometry, a spatial position of P is assumed to be:

$$P = [X, Y, Z]^T$$

According to a pinhole camera model, positions of two pixels $p_l$, $p_r$ in the left and right cameras through homogeneous coordinates are as follows:

$$p_l = KP, p_r = K'(RP + t)$$

where K is an intrinsic parameter matrix of the left camera, K' is an intrinsic parameter matrix of the right camera, and R and t are relative motions of a coordinate system corresponding to the left camera and a coordinate system corresponding to the right camera.

Assume $x_1 = K^{-1}p_l, x_2 = K'^{-1}p_r$

The foregoing $x_1$ and $x_2$ are respective coordinates on a normalized plane of the pixels $p_l$, $p_r$, and the foregoing $p_l = KP$, $p_r = K'(RP + t)$ may be simplified to obtain:

$x_2 = Rx_1 + t$, and obtain an outer product of each side in this formula and t, that is, left-multiply each side by

$$ap_r^3 + bp_r^2 + cp_r + d = 0$$ to obtain:

$[t]_x x_2 = [t]_x Rx_1$, and left-multiply each side in this formula by $x2$ to obtain:

$$x_2^T [t]_\times x_2 = x_2^T [t]_\times Rx_1$$

$$[t]_\times = \begin{bmatrix} 0 & -t_3 & t_2 \\ t_3 & 0 & -t_1 \\ -t_2 & t_1 & 0 \end{bmatrix}$$

where $t = [t_1 \ t_2 \ t_3]^T$, , and $[t]_x$ are skew-symmetric matrices of t, $t_1 \ t_2 \ t_3$ are three components of t, and $[t]_x x_2$ is a vector perpendicular to both t and $x_2$. An inner product of $[t]_x x_2$ and $x_2$ is 0, and therefore

$$x_2^T [t]_\times x_2 = x_2^T [t]_\times Rx_1 = 0$$ .

Substitute the foregoing $p_l = KP$, $p_r = K'(RP + t)$ into $x_2^T [t]_\times x_2 = x_2^T [t]_\times Rx_1 = 0$ to obtain:

$$p_r^T K'^{-1} [t]_\times RK^{-1} p_l = 0$$

Both $F = K'^{-1} [t]_x RK^{-1}$ and $x_2^T [t]_\times Rx_1 = 0$ are referred to as epipolar constraints. The geometric meaning is that $O_l, O_r, P$ are coplanar. Both translation and rotation are included in the epipolar constraints. The middle part of each formula is denoted as a fundamental matrix (fundamental Matrix). In this case,

$$p_r^T K'^{-1} [t]_\times R$$

$$K^{-1} p_l = 0$$

$[u \ v \ 1]^T$ may be further simplified to obtain:

$$x^T l = 0$$

$$F = K'^{-1} [t]_{\times} R K^{-1}$$

$$p_r^T F p_l = 0$$

where F is a 3×3 matrix, $p_l$ is $[u\ v\ 1]^T$ , and a straight line equation may be described as:

$$x^T l = 0$$

So $Fp_l$, may be described as a straight line equation:

$$l' = F p_l$$

where F is only related to intrinsic and extrinsic parameters and relative poses of the left camera and the right camera, and once the pixel of the left camera $p_l$ is provided, an epipolar curve that is corresponding to the pixel and that is in the right camera can be calculated. It should be noted that the foregoing pixel $p_l$ and the foregoing epipolar curve are de-distorted. That is, the straight line $l'$ is a corresponding de-distorted straight line that is of the pixel P1 and that is in a second overlapping field of view included by a second field of view observed by the right camera.

Further, a distorted epipolar curve needs to be determined after the de-distorted epipolar curve is obtained. That is, the method process shown in FIG. 8 further includes S840: determine a distorted epipolar curve based on the de-distorted epipolar curve.

Specifically, the determining a distorted epipolar curve includes the following steps:

First, choose discrete points in $l'$ to obtain N pixels p' in the right camera, and distort the N points p' as the right camera is distorted (contrary to the foregoing de-distortion process, and details are not described herein) to obtain distorted N pixels $p_r$ , where N is a positive integer.

Then, fit the N pixels $p_r$ to obtain a curve equation:

A distorted polar curve equation is obtained by fitting the distorted N pixels to a curve, where there are many fitting manners for a curve equation, such as a cubic curve and a Bezier curve, and a curve equation obtained through cubic curve fitting includes:

$$a p_r^3 + b p_r^2 + c p_r + d = 0$$

It should be noted that an epipolar curve of a common camera is approximately a straight line, and an epipolar curve of a fisheye camera is a curve with a radian because the fisheye camera has a large distortion parameter.

In the foregoing process, a curve equation of a distorted epipolar curve that is corresponding to a distorted pixel in the left camera and that is in the right camera can be obtained. The foregoing process is repeated pixel by pixel in an image in the overlapping field of view in the left camera, to obtain a corresponding polar curve of each pixel, and store these pixels and the corresponding epipolar curves in the on-board memory in a form of table or formula, for later use in an online process.

It should be noted that the foregoing execution processes of S710 and S720 are performed offline, and the correspondence calculated offline between the pixel and the corresponding epipolar curve is stored in the on-board memory. When the correspondence between the pixel and the epipolar curve needs to be used, the correspondence can be read directly from the memory to reduce online calculation time.

In addition, in the foregoing process of determining the epipolar curve, the distorted pixel and the distorted epipolar curve are determined, so as to avoid information loss caused by de-distortion.

Further, the generalized binocular camera formed by the first camera and the second camera that are configured for the first vehicle in a travelling process of the first vehicle obtains, in real time, environmental information outside the first vehicle. Because the mounting positions and the intrinsic and extrinsic parameters of the first camera and the second camera generally do not change in a travelling process of the first vehicle, after the correspondence between the pixel in the overlapping field of view in the left camera and the epipolar curve that is of the pixel and that is in the right camera is stored in the foregoing process, an epipolar curve that is of a pixel in a third overlapping field of view of a third field of view observed by the first camera in the travelling process of the first vehicle and that is in a fourth overlapping field of view of a fourth field of view observed by the second camera may be determined based on the foregoing correspondence.

The third field of view observed by the first camera is different from the first field of view observed by the first camera, and the fourth field of view observed by the second camera is different from the second field of view observed by the second camera. However, due to unchanged relative poses of the first camera and the second camera, when the first field of view and the second field of view have an overlapping field of view, the third field of view and the fourth field of view also have an overlapping field of view. For ease of distinguishing, the overlapping field of view between the third field of view and the fourth field of view is referred to as the third overlapping field of view in the third field of view, and is referred to as the fourth overlapping field of view in the fourth field of view.

The method process shown in FIG. 7 further includes S730: determine a matching point of the pixel based on the correspondence table.

After the correspondence table is determined in the foregoing process, a curve that is corresponding to the pixel in the third overlapping field of view and that is in the fourth overlapping field of view may be determined based on the correspondence table.

For example, the third overlapping field of view includes 10 pixels (pixel #11 to pixel #20), where positions and features of the 10 pixels in the third overlapping field of view respectively correspond to the 10 pixels (pixel # 1 to pixel # 10) included by the first overlapping field of view. In the foregoing process, it is determined that the pixel #1 corresponds to the epipolar curve #1, the pixel #2 corresponds to the epipolar curve #2, ..., the pixel #9 corresponds to the epipolar curve #9, and the pixel #10 corresponds to the epipolar curve #10. In this case, the pixel #11 corresponds to the epipolar curve #1, the pixel #12 corresponds to the epipolar curve #2, ..., the pixel #19 corresponds to the epipolar curve #9, and the pixel #20 corresponds to the epipolar curve #10.

Therefore, an epipolar curve that is corresponding to the pixel in the third overlapping field of view and that is in the fourth overlapping field of view may be quickly determined. After the epipolar curve is determined, a matching point corresponding to the pixel may be found in the epipolar curve corresponding to the pixel. For a specific matching process, refer to an existing epipolar matching solution. Details are not described herein in this application.

For example, a second pixel in the third overlapping field of view is determined, and based on the correspondence obtained and stored in S720 and a second epipolar curve corresponding to the second pixel determined by the second pixel from an on-board storage unit, a corresponding matching point of the second pixel is further found from the second epipolar curve. In this case, epipolar matching is completed.

It should be noted that in a process of determining a matching point in some embodiments of this application, because the foregoing process of determining an epipolar curve is determining a correspondence between a pixel in an overlapping field of view and an epipolar curve in an overlapping field of view, it may be understood that both the left camera and the right camera have the overlapping field of view, so as to avoid a problem that a corresponding matching point cannot be found.

In a possible implementation, for a process of determining the corresponding matching point of the second pixel in some embodiments of this application, refer to a direct matching method in the prior art to perform epipolar matching, as described in the foregoing description of generalized binocular ranging principles. Details are not described herein again.

In another possible implementation, to improve performance of determining the corresponding matching point of the second pixel, in some embodiments of this application, semantic information may be added to an epipolar matching process, and the semantic information includes freespace information.

It should be noted that the second pixel is any pixel in the third overlapping field of view, that is, all pixels in the third overlapping field of view may find corresponding matching points in the fourth overlapping field of view based on the stored correspondence and pixel features of the pixels. For ease of description, the second pixel is used as an example for description.

It may be understood that the ranging method provided by the embodiments of this application may be applied to a V2X scenario, where all participants in ranging are on the ground, and epipolar matching may be performed based on semantic information (for example, freespace information) on a lane, instead of finding the matching point corresponding to the second pixel in the fourth field of view observed by the right camera based on the second pixel in the third field of view observed by the left camera.

The following describes how to perform epipolar matching based on the freespace information by using an example in which the semantic information is the freespace information.

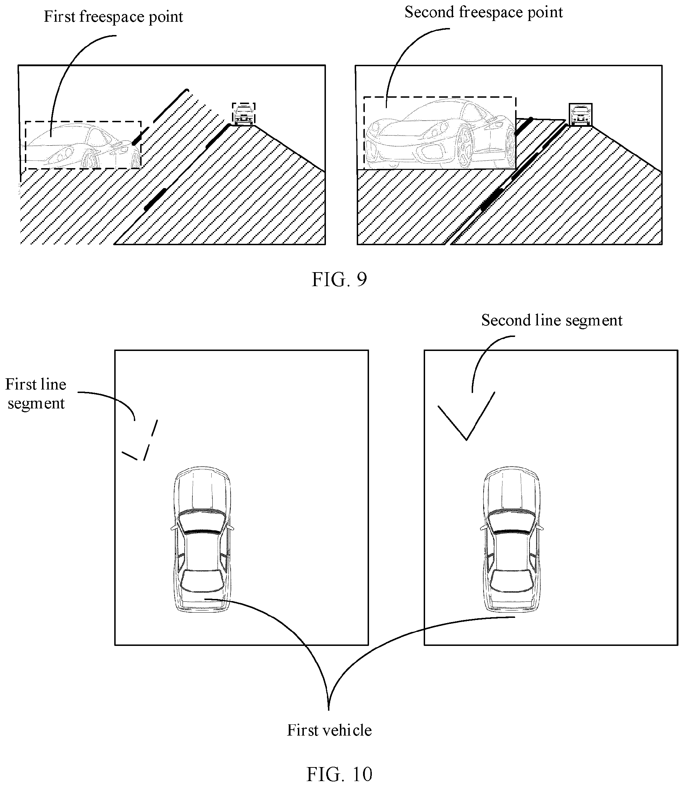

After obtaining the freespace information, the first vehicle can determine a drivable area and a non-drivable area, where the freespace information can be used to determine a first freespace point associated with an obstacle in the third field of view (the second pixel is a pixel on the obstacle) and a second freespace point associated with an obstacle in a fourth field of view, and both the freespace points are shown in FIG. 9. FIG. 9 is a schematic diagram of freespace points according to this application.

It can be learned from FIG. 9 that a first freespace point is a pixel in a dashed-line box in the third field of view observed by a left camera (the left figure in FIG. 9), and a second freespace point is a pixel in a solid-line box in the fourth field of view observed by a right camera (the right figure in FIG. 9).

The pixel in the dashed-line box and the pixel in the solid-line box in FIG. 9 may be converted to a vehicle body coordinate system of a first vehicle through the following formula:

$$\begin{bmatrix} u \\ v \\ 1 \end{bmatrix} = K \begin{bmatrix} R & t \end{bmatrix} \begin{bmatrix} x \\ y \\ z \\ 1 \end{bmatrix}$$

The right of the formula represents vehicle body coordinates, and the left of the formula represents pixel coordinates.

The first freespace point converted to the vehicle body coordinate system is fit to a first fitted line segment, and the second freespace point converted to the vehicle body coordinate system is fit to a second fitted line segment. Both the fitted line segments are shown in FIG. 10. FIG. 10 is a schematic diagram of fitting freespace points according to this application.

It can be learned from FIG. 10 that the first fitted line segment (the dashed line in the left figure of FIG. 10) fit to by the first freespace point and the second fitted line segment (the solid line in the right figure of FIG. 10) fit to by the second freespace point are each similar to an L-shaped figure formed by adjacent sides of a top view of an obstacle.

Further, a second pixel in the first fitted line segment may be chosen as a to-be-matched pixel in a third overlapping field of view of a left camera. First, the second pixel in the first line segment and a corresponding epipolar curve are determined from a stored correspondence. Then, an intersection of the determined epipolar curve and the second fitted line segment is determined as a matching point of the to-be-matched second pixel.

The foregoing solution for determining the matching point based on the semantic information can speed up determining a matching point that is of a pixel in an overlapping area in the left camera and that is in the right camera.

Specifically, after the matching point is determined, ranging may be implemented based on triangulation to measure a distance between an object and a device. That is, the method process shown in FIG. 7 further includes S740: measure a distance between an object and a device.

In some embodiments of this application a triangulation-based ranging process is provided, including the following steps:

De-distort a to-be-matched point $p_l$ in a left camera and an obtained matching point $p_r$ that is of $p_l$ and that is in a right camera through respective cameras and multiply both points by respective intrinsic parameter inverse matrices of the left and right cameras to obtain respective normalized coordinates $f_l$ and $f_r$ of the pixels, where a calculation formula of the normalized coordinates is as follows:

$$\begin{bmatrix} x \\ y \\ 1 \end{bmatrix} = K^{-1} \begin{bmatrix} u \\ v \\ 1 \end{bmatrix}$$

According to a formula of a distance between the left and right cameras:

$$d_l f_l = d_r R f_r + t$$

where $d_l$ and $d_r$ are depths of the left and right cameras respectively relative to the obstacle, and the preceding equation is equivalent to:

$$d_l f_l - d_r R f_r = t$$

$$\begin{bmatrix} Rf_r & f_l \end{bmatrix} \begin{bmatrix} -d_r \\ d_l \end{bmatrix} = t$$

$$\begin{bmatrix} Rf_r \\ f_l \end{bmatrix} \begin{bmatrix} Rf_r & f_l \end{bmatrix} \begin{bmatrix} -d_r \\ d_l \end{bmatrix} = \begin{bmatrix} Rf_r \\ f_l \end{bmatrix} t$$

$$A^T A \begin{bmatrix} -d_r \\ d_l \end{bmatrix} = A^T t$$

$$\begin{bmatrix} -d_r \\ d_l \end{bmatrix} = -(A^T t)^{-1} A^T t$$

The depths may be obtained, where the depths may be understood as the distances in the x direction of the vehicle body coordinate system.

It should be noted that a specific triangulation-based ranging process is not limited in this application. For details, refer to an existing solution for calculating a distance based on the to-be-matched point $p_l$ and the matching point $p_r$, or refer to a future solution for calculating a distance based on the to-be-matched point $p_l$ and the matching point $p_r$.

It should be understood that the ranging apparatus in the foregoing method embodiments may perform some or all of the steps in the embodiments. These steps or operations are merely examples. Some embodiments of this application may further include performing other operations or variations of various operations.

It should be further understood that, in the embodiments of this application, unless otherwise specified or in case of a logical conflict, terms and/or descriptions in different embodiments may be consistent and may be mutually referenced. Technical features in different embodiments may be combined based on an internal logical relationship of the technical features to form a new embodiment.

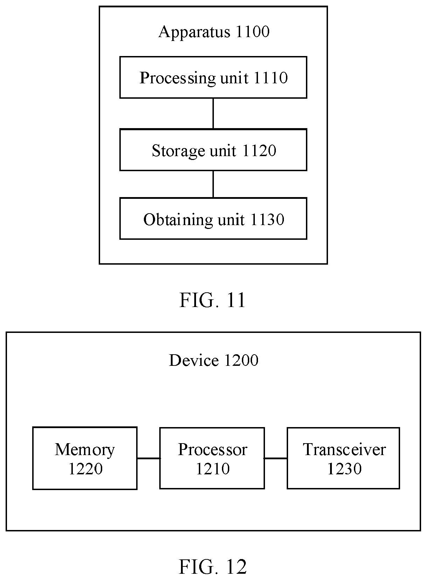

The foregoing describes in detail the ranging method with reference to FIG. 7 to FIG. 10. The following describes in detail a ranging apparatus provided in some embodiments of this application with reference to FIG. 11 and FIG. 12.

FIG. 11 is a schematic diagram of a ranging apparatus 1100 according to this application. As shown in FIG. 11, the apparatus 1100 includes a processing unit 1110 and an obtaining unit 1120.

The processing unit 1110 is configured to determine a first field of view observed by a first ranging unit and a second field of view observed by a second ranging unit, where the first field of view includes a first overlapping field of view, and the second field of view includes a second overlapping field of view, and the first overlapping field of view is the same as the second overlapping field of view.

The processing unit 1110 is further configured to determine, in an offline state, a first pixel in the first overlapping field of view and a first epipolar curve corresponding to the first pixel in the second overlapping field of view, where the first pixel is any distorted pixel in the first overlapping field of view.

The obtaining unit 1120 is configured to obtain a correspondence between all pixels in the first overlapping field of view and epipolar curves corresponding to all the pixels in the second overlapping field of view.

The obtaining unit 1120 is further configured to obtain online a third field of view observed by the first ranging unit and a fourth field of view observed by the second ranging unit, where the third field of view includes a third overlapping field of view, the fourth field of view includes a fourth overlapping field of view, and the third overlapping field of view is the same as the fourth overlapping field of view.

For example, the processing unit 1110 is further configured to determine a second pixel in the third overlapping field of view.

For example, the processing unit 1110 is further configured to determine, based on the correspondence and the second pixel, a matching point corresponding to the second pixel in the fourth overlapping field of view, where the second pixel is any pixel in the third overlapping field of view.

For example, that the processing unit 1110 determines a matching point corresponding to the second pixel in the fourth overlapping field of view includes:

The processing unit 1110 determines, based on the correspondence and the second pixel, a second epipolar curve corresponding to the second pixel in the fourth overlapping field of view.

The processing unit 1110 determines the matching point in the second epipolar curve.

For example, before determining the matching point corresponding to the second pixel in the fourth overlapping field of view, the processing unit 1110 is further configured to determine, based on freespace information of the device, a first freespace point corresponding to the third overlapping field of view and a second freespace point corresponding to the fourth field of view, where the first freespace point corresponds to a first fitted line segment, and the second freespace point corresponds to a second fitted line segment.

That the processing unit 1110 determines a second pixel in the third overlapping field of view includes:

The processing unit 1110 determines the second pixel in the first fitted line segment.

That the processing unit 1110 determines a matching point corresponding to the second pixel in the fourth overlapping field of view includes:

The processing unit 1110 determines, based on the correspondence and the second pixel, the second epipolar curve corresponding to the second pixel in the fourth overlapping field of view, where an intersection of the second epipolar curve and the second fitted line segment is the matching point.

For example, that the processing unit 1110 determines a first epipolar curve corresponding to the first pixel in the second overlapping field of view includes:

The processing unit 1110 determines, based on a parameter of the first ranging unit, a de-distorted first pixel corresponding to the first pixel.

The processing unit 1110 determines a de-distorted first epipolar curve based on the de-distorted first pixel.

The processing unit 1110 determines N discrete pixels in the de-distorted first epipolar curve, where N is a positive integer.

The processing unit 1110 determines, based on a parameter of the second ranging unit, distorted N discrete pixels corresponding to the N discrete pixels.

The processing unit 1110 fits the distorted N discrete pixels to obtain the first epipolar curve.

The apparatus 1100 completely corresponds to the device including a plurality of ranging units in the method embodiments. The apparatus 1100 may be the device including the plurality of ranging units in the method embodiments, or a chip or a functional module inside the device including the plurality of ranging units in the method embodiments. The corresponding units of the apparatus 1100 are configured to perform corresponding steps in the method embodiment shown in FIG. 7 performed by the device including the plurality of ranging units.

The processing unit 1110 of the apparatus 1100 is configured to perform processing-related steps performed by the device including the plurality of ranging units in the method embodiments. For example, the processing unit 1110 performs S710: determine a first field of view observed by a first ranging unit and a second field of view observed by a second ranging unit and S720: obtain a correspondence between a pixel and a corresponding epipolar curve as a table in FIG. 7.

The obtaining unit 1120 of the apparatus 1100 performs obtaining steps performed by the device including the plurality of ranging units in the method embodiments. For example, the obtaining unit 1120 and a sending unit may form a transceiver unit that has both receiving and sending functions. The processing unit 1110 may be at least one processor. The sending unit may be a transmitter or an interface circuit. The obtaining unit 1120 may be a receiver or an interface circuit. The receiver and the transmitter may be integrated to form a transceiver or an interface circuit.

The apparatus 1100 further includes a storage unit 1130 (not shown in FIG. 11), configured to store data and/or signaling. The processing unit 1110 and the obtaining unit 1120 may interact with or be coupled to the storage unit 1130, for example, read or invoke the data and/or signaling in the storage unit, so that the method in the foregoing embodiments is executed.

The foregoing units may exist independently, or may be all or partially integrated.

FIG. 12 is a schematic diagram of a structure of a device 1200 applicable to an embodiment of this application. The device 1200 may be configured to implement functions of the device in the foregoing ranging method. The device 1200 includes a processor 1210, a memory 1220, and a transceiver 1230. The memory 1220 stores instructions or a program. The processor 1230 is configured to execute the instructions or the program stored in the memory 1220. When the instructions or the program stored in the memory 1220 is executed, the transceiver 1230 is configured to perform the operations performed by the obtaining unit 1120 of the apparatus 1100 shown in FIG. 11.

In some embodiments of this application a communications system is further provided, including the foregoing first vehicle and an access network device.

In some embodiments of this application a communications system is further provided, including the foregoing second vehicle, the first vehicle, and an access network device.

This application further provides a computer-readable storage medium. The computer-readable storage medium stores instructions. When the instructions are run on a computer, the computer is enabled to perform the steps performed by the device in the method shown in FIG. 7.

This application further provides a computer program product including instructions. When the computer program product is run on a computer, the computer is enabled to perform the steps performed by the device in the method shown in FIG. 7.

This application further provides a chip, including a processor. The processor is configured to read a computer program stored in a memory and run the computer program, to perform a corresponding operation and/or process performed by the device in the ranging method provided by this application. Optionally, the chip further includes the memory, the memory is connected to the processor through a circuit or a wire, and the processor is configured to read and execute the computer program in the memory. Further, optionally, the chip further includes a communications interface, and the processor is connected to the communications interface. The communications interface is configured to receive data and/or information to be processed, and the processor obtains the data and/or information from the communications interface, and processes the data and/or information. The communications interface may be an input/output interface, an interface circuit, an output circuit, an input circuit, a pin, a related circuit, or the like on the chip. The processor may alternatively be a processing circuit or a logic circuit.

The foregoing chip may be replaced with a chip system, and details are not described herein.

In this application, the terms "include", "have" and any other variants mean to cover the non-exclusive inclusion, for example, a process, method, system, product, or device that includes a series of steps or units is not necessarily limited to those steps or units that are clearly listed, but may include other steps or units not expressly listed or inherent to such a process, method, product, or device.

Persons of ordinary skill in the art may be aware that units and algorithm steps in the examples described with reference to the embodiments disclosed in this specification can be implemented by electronic hardware or a combination of computer software and electronic hardware. Whether these functions are performed by hardware or software depends on particular applications and design constraints of the technical solutions. A person skilled in the art may use different methods to implement the described functions for each particular application, but it should not be considered that the implementation goes beyond the scope of this application.

A person skilled in the art may clearly understand that for the purpose of convenient and brief description, for detailed working processes of the foregoing system, apparatus, and unit, refer to corresponding processes in the foregoing method embodiments. Details are not described herein again.

In several embodiments provided by this application, it should be understood that the disclosed system, apparatus, and method may be implemented in another manner. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, and may be located in one position, or may be distributed on a plurality of network units. A part or all of the units may be selected based on actual requirements to achieve the objectives of the solutions of the embodiments.

In addition, functional units in the embodiments of this application may be integrated into one processing unit, or each of the units may exist alone physically, or at least two units are integrated into one unit.

When the functions are implemented in a form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for instructing a computer device (which may be a personal computer, a server, or a network device) to perform all or some of the steps of the methods according to the embodiments of this application. The foregoing storage medium includes any medium, for example, a USB flash drive, a removable hard disk, a read-only memory (read-only memory, ROM), a random access memory (random access memory, RAM), a magnetic disk, or an optical disc, that can store program code.

In addition, the term "and/or" in this application describes only an association relationship for describing associated objects and represents that three relationships may exist. For example, A and/or B may indicate the following three cases: Only A exists, both A and B exist, and only B exists. In addition, the character "/" in this specification generally indicates an "or" relationship between the associated objects. The term "at least one" in this application may represent "one" and "two or more". For example, at least one of A, B, and C may indicate the following seven cases: Only A exists, only B exists, only C exists, both A and B exist, both A and C exist, both C and B exist, and A, B, and C exist.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A ranging method, applied to a device configured with a plurality of ranging units, wherein the method comprises:

   determining a first field of view observed by a first ranging unit and a second field of view observed by a second ranging unit, wherein the first field of view comprises a first overlapping field of view, the second field of view comprises a second overlapping field of view, and the first overlapping field of view is the same as the second overlapping field of view;
   determining, in an offline state, a first pixel in the first overlapping field of view and a first epipolar curve corresponding to the first pixel in the second overlapping field of view, wherein the first pixel is any distorted pixel in the first overlapping field of view; and
   obtaining a correspondence between all pixels in the first overlapping field of view and epipolar curves corresponding to all the pixels in the second overlapping field of view.

2. The method according to claim 1, wherein the method further comprises:

   obtaining online a third field of view observed by the first ranging unit and a fourth field of view observed by the second ranging unit, wherein the third field of view comprises a third overlapping field of view, the fourth field of view comprises a fourth overlapping field of view, and the third overlapping field of view is the same as the fourth overlapping field of view;
   determining a second pixel in the third overlapping field of view; and
   determining, based on the correspondence and the second pixel, a matching point corresponding to the second pixel in the fourth overlapping field of view, wherein the second pixel is any pixel in the third overlapping field of view.

3. The method according to claim 2, wherein the determining a matching point corresponding to the second pixel in the fourth overlapping field of view comprises:

   determining, based on the correspondence and the second pixel, a second epipolar curve corresponding to the second pixel in the fourth overlapping field of view; and
   determining the matching point in the second epipolar curve.

4. The method according to claim 2 or 3, wherein before the determining a matching point corresponding to the second pixel in the fourth overlapping field of view, the method further comprises:

   determining, based on freespace information of the device, a corresponding first freespace point of the third overlapping field of view and a second freespace point corresponding to the fourth field of view, wherein the first freespace point corresponds to a first fitted line segment, and the second freespace point corresponds to a second fitted line segment;
   the determining a second pixel in the third overlapping field of view comprises:

      determining the second pixel in the first fitted line segment; and
      the determining a matching point corresponding to the second pixel in the fourth overlapping field of view comprises:
      determining, based on the correspondence and the second pixel, the second epipolar curve corresponding to the second pixel in the fourth overlapping field of view, wherein an intersection of the second epipolar curve and the second fitted line segment is the matching point.

5. The method according to any one of claims 1 to 4, wherein the determining a first epipolar curve corresponding to the first pixel in the second overlapping field of view comprises:

   determining, based on a parameter of the first ranging unit, a de-distorted first pixel corresponding to the first pixel;
   determining, based on the de-distorted first pixel, a de-distorted first epipolar curve;
   determining N discrete pixels in the de-distorted first epipolar curve, wherein N is a positive integer;
   determining, based on a parameter of the second ranging unit, distorted N discrete pixels corresponding to the N discrete pixels; and
fitting the distorted N discrete pixels to obtain the first epipolar curve.

6. The method according to any one of claims 1 to 5, wherein the device comprises a first vehicle.

7. The method according to any one of claims 1 to 6, wherein the ranging unit comprises a camera, and a first camera and a second camera have different fields of view FOVs and/or focal lengths, or the first camera and the second camera are heterogeneous cameras.

8. A ranging apparatus, comprising:

a processing unit, configured to determine a first field of view observed by a first ranging unit and a second field of view observed by a second ranging unit, wherein the first field of view comprises a first overlapping field of view, and the second field of view comprises a second overlapping field of view; and the first overlapping field of view is the same as the second overlapping field of view;
the processing unit is further configured to determine, in an offline state, a first pixel in the first overlapping field of view and a first epipolar curve corresponding to the first pixel in the second overlapping field of view, wherein the first pixel is any distorted pixel in the first overlapping field of view; and
an obtaining unit, configured to obtain a correspondence between all pixels in the first overlapping field of view and epipolar curves corresponding to all the pixels in the second overlapping field of view.

9. The apparatus according to claim 8, wherein the obtaining unit is further configured to obtain online a third field of view observed by the first ranging unit and a fourth field of view observed by the second ranging unit, wherein the third field of view comprises a third overlapping field of view, the fourth field of view comprises a fourth overlapping field of view, and the third overlapping field of view is the same as the fourth overlapping field of view;

the processing unit is further configured to determine a second pixel in the third overlapping field of view; and
the processing unit is further configured to determine, based on the correspondence and the second pixel, a matching point corresponding to the second pixel in the fourth overlapping field of view, wherein the second pixel is any pixel in the third overlapping field of view.

10. The apparatus according to claim 9, wherein that the processing unit is configured to determine a matching point corresponding to the second pixel in the fourth overlapping field of view comprises:

the processing unit determines, based on the correspondence and the second pixel, a second epipolar curve corresponding to the second pixel in the fourth overlapping field of view; and
the processing unit determines the matching point in the second epipolar curve.

11. The apparatus according to claim 9 or 10, wherein before determining the matching point corresponding to the second pixel in the fourth overlapping field of view, the processing unit is further configured to determine, based on freespace information of the device, a first freespace point corresponding to the third overlapping field of view and a second freespace point corresponding to the fourth field of view, wherein the first freespace point corresponds to a first fitted line segment, and the second freespace point corresponds to a second fitted line segment;
that the processing unit is configured to determine a second pixel in the third overlapping field of view comprises:

the processing unit determines the second pixel in the first fitted line segment; and
that the processing unit is configured to determine a matching point corresponding to the second pixel in the fourth overlapping field of view comprises:

the processing unit determines, based on the correspondence and the second pixel, the second epipolar curve corresponding to the second pixel in the fourth overlapping field of view, wherein an intersection of the second epipolar curve and the second fitted line segment is the matching point.

12. The apparatus according to any one of claims 8 to 11, wherein that the processing unit is configured to determine a first epipolar curve corresponding to the first pixel in the second overlapping field of view comprises:

the processing unit determines, based on a parameter of the first ranging unit, a de-distorted first pixel corresponding to the first pixel;

the processing unit determines, based on the de-distorted first pixel, a de-distorted first epipolar curve;

the processing unit determines N discrete pixels in the de-distorted first epipolar curve, wherein N is a positive integer;

the processing unit determines, based on a parameter of the second ranging unit, distorted N discrete pixels corresponding to the N discrete pixels; and

the processing unit fits the distorted N discrete pixels to obtain the first epipolar curve.

13. The apparatus according to any one of claims 8 to 12, wherein the apparatus comprises a first vehicle.

14. The apparatus according to any one of claims 8 to 13, wherein the ranging unit comprises a camera, and a first camera and a second camera have different fields of view FOVs and/or focal lengths, or the first camera and the second camera are heterogeneous cameras.

15. A ranging apparatus, comprising:

a processor and a communications interface, wherein

the processor is coupled to a memory by using an interface circuit, and the processor is configured to execute program code in the memory, to implement the method according to any one of claims 1 to 7.

16. A vehicle-mounted device, configured to perform the method according to any one of claims 1 to 7.

17. A communications system, comprising the apparatus according to any one of claims 8 to 14, and an access network device.

18. A chip, comprising a communications interface, a memory, and a processor, wherein the memory is configured to store a computer program, and the processor is configured to read and execute the computer program stored in the memory, so that the chip implements the method according to any one of claims 1 to 7.

19. A computer-readable storage medium, wherein

the computer-readable medium stores a computer program; and

when the computer program is run on a computer, the computer is enabled to perform the method according to any one of claims 1 to 7.

Pedestrian

Infrastructure/network

Vehicle

V2P

V2V

V2I/N

Vehicle

FIG. 1

2D bounding box width

Second vehicle

(x1,y1)

(x2,y2)

FIG. 2

: Overlapping field of view #1

: Overlapping field of view #2

☐ : Third camera

▦ : Fifth camera

⊠ : Sixth camera

Area #1

Area #2

Area #3

FIG. 3

Left camera

Right camera

FIG. 4

FIG. 5

FIG. 6

Determine a first field of view observed by a first ranging unit and a second field of view observed by a second ranging unit — S710

Obtain a correspondence between a pixel and a corresponding epipolar curve as a table — S720

Determine a matching point of the pixel based on the correspondence table — S730

Measure a distance between an object and a device — S740

FIG. 7

Determine a distorted pixel Pl in a first overlapping field of view — S810

Perform de-distortion on the distorted pixel Pl to obtain a de-distorted pixel P — S820

Determine a de-distorted epipolar curve based on the de-distorted pixel P — S830

Determine a distorted epipolar curve based on the de-distorted epipolar curve — S840

FIG. 8

First freespace point

Second freespace point

FIG. 9

Second line segment

First line segment

First vehicle

FIG. 10

Apparatus 1100

Processing unit 1110

Storage unit 1120

Obtaining unit 1130

FIG. 11

Device 1200

Memory
1220

Processor
1210

Transceiver
1230

FIG. 12

## INTERNATIONAL SEARCH REPORT

| International application No. |
|---|
| **PCT/CN2020/090994** |

**A.    CLASSIFICATION OF SUBJECT MATTER**

G01B 11/02(2006.01)i

According to International Patent Classification (IPC) or to both national classification and IPC

**B.    FIELDS SEARCHED**

Minimum documentation searched (classification system followed by classification symbols)

G01B 11/-

Documentation searched other than minimum documentation to the extent that such documents are included in the fields searched

Electronic data base consulted during the international search (name of data base and, where practicable, search terms used)

CNKI, CNPAT, EPODOC, WPI: 华为, 朱捷, 陈亦伦, 许彬, 像素, 对极曲线, 视野, 重合, 匹配, 配对, 畸变, 离线, 在线, 可行驶区域, 拟合, 交点; epipolar, line, curve, distance, match, vehicle, point

**C.    DOCUMENTS CONSIDERED TO BE RELEVANT**

| Category* | Citation of document, with indication, where appropriate, of the relevant passages | Relevant to claim No. |
|---|---|---|
| Y | 李鲜莉 (LI, Xianli). "多型视觉传感协同目标跟踪方法研究 (Research on Collaborative Target Tracking with Multi-types Vision Sensor)" 中国优秀硕士学位论文全文数据库信息科技辑 (Information & Technology, China Master's Theses Full-Text Database), No. 02, 15 February 2018 (2018-02-15), ISSN: 1674-0246,<br>    pages 22-56, figures 3-7, 4-1, 4-8 | 1-3, 5-10, 12-19 |
| Y | CN 110631556 A (HUZHOU SOUTH TAILAKE INTELLIGENT YACHT RESEARCH INSTITUTE) 31 December 2019 (2019-12-31)<br>    description, paragraphs [0042]-[0074], and figures 1-3 | 1-3, 5-10, 12-19 |
| A | CN 108447092 A (INSTITUTE OF AUTOMATION, CHINESE ACADEMY OF SCIENCES) 24 August 2018 (2018-08-24)<br>    entire document | 1-19 |
| A | CN 104574443 A (XI'AN UNIVERSITY OF TECHNOLOGY) 29 April 2015 (2015-04-29)<br>    entire document | 1-19 |
| A | CN 107038714 A (XI'AN UNIVERSITY OF TECHNOLOGY) 11 August 2017 (2017-08-11)<br>    entire document | 1-19 |

☑ Further documents are listed in the continuation of Box C.     ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **21 January 2021** | **20 February 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**

| International application No. |
|---|
| **PCT/CN2020/090994** |

**C.    DOCUMENTS CONSIDERED TO BE RELEVANT**

| Category* | Citation of document, with indication, where appropriate, of the relevant passages | Relevant to claim No. |
|---|---|---|
| A | CN 107909543 A (QINHUANGDAO AUDIO-VISUAL MACHINERY RESEARCH INSTITUTE) 13 April 2018 (2018-04-13)<br>     entire document | 1-19 |
| A | CN 108399360 A (HISENSE GROUP CO., LTD.) 14 August 2018 (2018-08-14)<br>     entire document | 1-19 |
| A | US 2016234473 A1 (SAMSUNG ELECTRONICS CO., LTD.) 11 August 2016 (2016-08-11)<br>     entire document | 1-19 |

Form PCT/ISA/210 (second sheet) (January 2015)

### INTERNATIONAL SEARCH REPORT
**Information on patent family members**

International application No.

**PCT/CN2020/090994**

| Patent document cited in search report | | | Publication date (day/month/year) | Patent family member(s) | | | Publication date (day/month/year) |
|---|---|---|---|---|---|---|---|
| CN | 110631556 | A | 31 December 2019 | None | | | |
| CN | 108447092 | A | 24 August 2018 | CN | 108447092 | B | 28 July 2020 |
| CN | 104574443 | A | 29 April 2015 | CN | 104574443 | B | 08 September 2017 |
| CN | 107038714 | A | 11 August 2017 | CN | 107038714 | B | 14 January 2020 |
| CN | 107909543 | A | 13 April 2018 | None | | | |
| CN | 108399360 | A | 14 August 2018 | None | | | |
| US | 2016234473 | A1 | 11 August 2016 | US | 10063831 | B2 | 28 August 2018 |
| | | | | KR | 20160098020 | A | 18 August 2016 |

Form PCT/ISA/210 (patent family annex) (January 2015)